# EUROPEAN PATENT SPECIFICATION

(11) **EP 3 482 928 B1**
(45) Date of publication and mention of the grant of the patent: **16.02.2022**
(21) Application number: 17201217.1
(22) Date of filing: 10.11.2017
(51) Int. Cl.: B32B 7/12, B32B 27/08, B32B 27/32, B32B 1/08

(54) **LAMINATED MATERIAL FOR FORMING A FLEXIBLE CONTAINER, ASSEMBLY COMPRISING SAID LAMINATED MATERIAL AND A TUBE HEAD, AND FLEXIBLE CONTAINER COMPRISING SAID ASSEMBLY AND A CAP**
LAMINIERTES MATERIAL ZUR FORMUNG EINES FLEXIBLEN BEHÄLTERS, ANORDNUNG MIT BESAGTEM LAMINIERTEN MATERIAL UND TUBENKOPF UND FLEXIBLER BEHÄLTER MIT BESAGTER ANORDNUNG UND KAPPE
MATÉRIAU STRATIFIÉ POUR FORMER UN RÉCIPIENT SOUPLE, ENSEMBLE COMPRENANT LEDIT MATÉRIAU STRATIFIÉ ET TÊTE DE TUBE, ET RÉCIPIENT SOUPLE COMPRENANT LEDIT ENSEMBLE ET CAPUCHON

(43) Date of publication of application: 15.05.2019
(73) Proprietor: Albéa Services, 92230 Gennevilliers (FR)
(72) Inventor: MUTHA, Nitin, 51100 Reims (FR)
(74) Representative: Gevers & Orès

(56) References cited:
- WO-A1-99/19229
- US-A1- 2016 272 389

## Description

The invention relates to a laminated material for forming a container. The invention also relates to an assembly comprising said laminated material and a tube head. The invention finally relates to a flexible container comprising said assembly and a cap.

Nowadays, the worldwide plastic production represents one of the biggest waste sources. The recycling of these plastic products is a major concern for national and regional organizations. The non-recycled plastic materials are currently disposed of by a variety of processes from landfill disposal to energy recovery through thermal and chemical treatments.

In the case of cosmetic packaging industry, laminated materials comprising several layers are widely used as they represent advantages in terms of permeability and mechanical properties.

Especially, layers of aluminium are usually used as barrier layer. Such aluminium layer is firmly bonded to layers of plastic materials. This presents a problem for recycling the laminated materials, as the plastic materials and aluminium cannot be readily separated and sorted into separate recycling streams.

The applicant has hence handled deep studies to replace the aluminium barrier layer by another barrier layer responding to the recycling and the permeability requirements. SiOx has been found to be a promising barrier material compatible with recycling issues. Such a barrier layer comprises a thin SiOx barrier coated on a polymer carrier layer.

The general technical background of the invention also includes WO 99/19229 A1 and US 2016/272389 A1.

However, the barrier properties of the SiOx are not as satisfactory as for the aluminium. Thus, there is still a need for an improved laminated material comprising a SiOx based barrier layer.

In order to do so, the applicant tested a plurality of combinations of laminated material based on various polymers suitable for lamination process to respectively define the carrier layer and the inner/outer layers of the laminate.

Surprisingly, the applicant discovered that the use of PE for inner/outer layers with a SiOx barrier layer comprising a carrier layer made of a polymer suitable for lamination process, especially PP, improves the permeability properties of the laminated material, especially when compared to laminated materials comprising a carrier layer made of PP combined with PP inner/outer layers, the latter being far more permeable (difference between 1 to at least 10).

However, the use of a plurality of different polymer in the same laminated material may be limited by the recycling requirements. Indeed, plastic materials are often incompatible with one another. This means that the recycling of incompatible mixed materials leads to a recycled material with degraded properties, which will no longer respond to noble applications with high added value. It is recommended within a same device to use compatible plastic materials because the properties of recycled plastics drop rapidly if they are contaminated with incompatible plastics.

In the case of an obligation to use incompatible plastics in the same part, it is today seen as necessary to ensure that these materials can be separated easily during a dismantling phase or can be separated by physico-mechanical sorting after the grinding phase of the part when comes the time to recycle the products made thereof.

According to the invention, as among at least the inner layer, the carrier layer and the outer layer, only the carrier layer comprises a material which is potentially not in PE, the quantity of material potentially not in PE is limited within the laminated material, which is advantageous for the recyclability. Especially, a percentage in mass of PE within the laminated material (1) being set above a given threshold to adjust the permeability of the laminated material (1), said threshold being 80%.

In other words, the invention concerns a laminated material for forming a flexible container, the laminated material comprising an inner layer, an outer layer and an intermediate barrier layer, the barrier layer comprising a SiOx barrier and a carrier layer carrying said SiOx barrier, said carrier layer being made of polymer suitable for lamination process, the inner layer and the outer layers both comprising PE.

In such laminated material, the use of a SiOx barrier combined with a limited amount of potentially non PE polymer allows a good recyclability. The use of PE surprisingly increases the non-permeability. The use of a barrier layer made of a carrier layer made of polymer suitable for lamination process and a SiOx barrier gives access to standard SiOx barriers.

The invention can also comprise any of the following features taken individually or in any technically possible combination:
- the carrier layer is made of polyolefin,
- the carrier layer is made of PP,
- the inner layer is made of PE,
- the outer layer is made of PE,
- the layers made of PE has a biaxial orientation,
- the carrier layer has a monoaxial orientation,
- the SiOx barrier is coated on the carrier layer, especially toward the outer layer,
- the laminated material comprises a tie and/or adhesive layer between the barrier layer and the inner layer and/or between the barrier layer and the outer layer,
- the thickness of the carrier layer is comprised between 15µm and 30µm, the total thickness of the laminated material being comprised between 150µm and 300µm such that the proportion in mass of the carrier layer represent at most 10% in mass within the laminated material,
- the laminated material having a substantially symmetrical layering structure from either side of said barrier layer.

The invention also relates to an assembly comprising said laminated material and a tube head, said laminated material forming a tube skirt joined to the tube head, wherein said tube head is made of PE.

According to a given embodiment, PE represents at least 90% or even 95% in mass of the assembly.

The invention also relates to a flexible container, comprising said assembly and a cap, wherein said cap is made of PE.

According to a given embodiment, the PE represents at least 90% or even 95% in mass of the flexible container.

The invention will be better understood on the light of the following description which is only indicative and which is not intended to limit said invention, accompanied with the following figures:
- Figure 1 is a schematic diagram of the layers that form the laminate according to a first embodiment of the present invention,
- Figure 2 is a schematic diagram of the layers that form the laminate according to a second embodiment of the present invention,
- Figure 3 is a schematic diagram of the layers that form the laminate according to a third embodiment of the present invention,
- Figure 4 shows an assembly according the present invention,
- Figure 5 is sectional view of the assembly of figure 2,
- Figure 6 shows a flexible container according to the present invention.

### Detailed description:

In the context of the invention, the following definitions and abbreviations are used:
As used herein, the terms "over", "outer", "inner", "upper" and "under", and the like, used with respect to the various layers refer to the laminated material with the intended outer surface uppermost and the intended inner (product-contacting) surface lowermost. In addition, these terms and the term "on" does not imply that the layers are necessarily directly in contact. For example, the upper layer being "formed on" the barrier layer does not preclude the presence of one or more other intervening layers located between the upper layer and the barrier layer. Furthermore, layers may be provided under the inner layer, i.e. between the inner layer and the product, or above the outer layer (like decorative layers).

The term "container" is used herein to refer to an item which may contain a product. Such products are usually liquids, gels or pastes. Preferred containers include tubes and pouches. The container may further comprise a lid or a cap and, if necessary, attachment means for the lid or cap (such as a shoulder) before it forms a useful commercial container. As a consequence, the laminated material of the invention can form a tube skirt, an insert of a tube head or a combination thereof.

The term "flexible" as used herein describes a laminate or a container made thereof which can bend or be bent easily and which does not break (unless it is bent too much). Herein in connection with the containers the term flexible indicates that if the container is subjected to a force, for example, by being filled with a liquid, or by applying pressure with a finger or a hand, it will change its form without breaking. A flexible container can also be considered to be a "squeezable" container.

The term "tie layer", "adhesive layer" or "primer layer" refers to a layer which is placed between two layers with the object of ensuring that the two layers are joined together.

"SiOx" means silicon oxide which is to say a material containing silicon, oxygen, and optionally other elements, in which x, the ratio of oxygen to silicon atoms, is from about 0.1 to about 2. Preferably, the ratio of oxygen to silicon atoms is from about 0.1 to about 1.2. These alternative values of x apply to any use of the term SiOx in this specification to define a composite barrier coating or layer.

The term "polymer" refers to a large molecule, or macromolecule, composed of many repeated subunits.

The term "polyolefin" refers to any of a class of polymers produced from a simple olefin as a monomer.

The term "PP" refers to polypropylene.

The term "PE" refers to polyethylene.

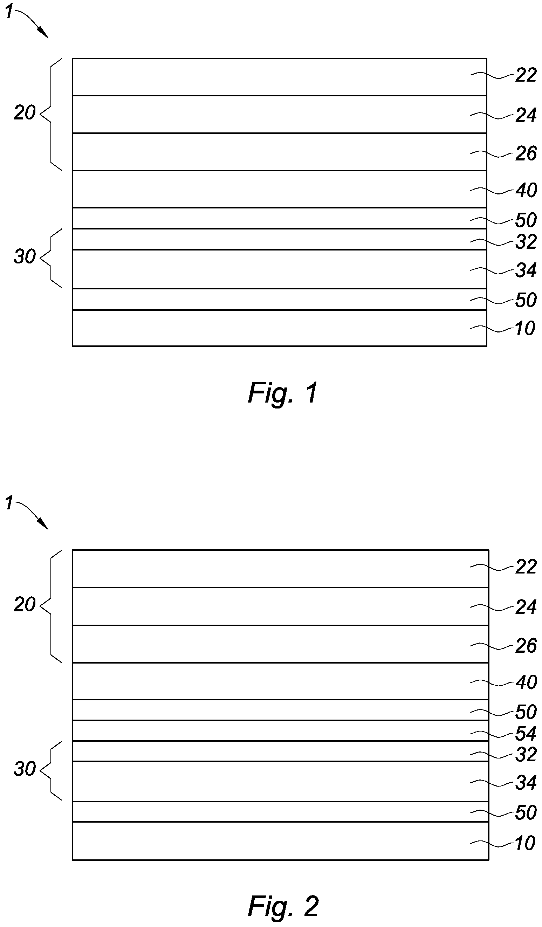

As illustrated in figures 1 to 3, the invention relates to a laminated material 1 for forming a flexible container, the laminated material 1 comprising an inner layer 10, an outer layer 20 and an intermediate barrier layer 30, located between the inner layer 10 and the outer layer 20.

Said inner layer 10 can be composed by a plurality of single layers. Said outer layer can be composed by a plurality of single layers 22, 24 and 26. The number of single layers composing the inner layer and the outer layer is not limited to the example illustrated in the figures.

The different single layers can be cast type films or blown type film.

The different layers are joined together by lamination process in order to obtain the laminated material according the invention. Said laminated material can be obtained by different lamination process, as extrusion lamination process or adhesive lamination process.

These two types of manufacturing process have an impact on some mechanical properties of the obtained laminated material. In particular, the manufacturing process may determine the molecular orientation of the layers.

The barrier layer 30 aims to prevent gas exchange between the air outside the tube and the product contained in the container. Especially, the barrier layer 30 aims at avoiding contamination of the product contained in the container by oxygen coming from outside air. It aims also at avoiding that essence of flavors coming from the product contained in the container may migrate outside the tube.

Said barrier layer 30 comprises a SiOx barrier 32 carried by a carrier layer 34. The SiOx has good barrier properties and has also been found to be advantageous for the recycling of the container.

Advantageously, the SiOx barrier 32 is oriented toward the outer layer 20. That is to say, the SiOx barrier 32 is carried on the side of the carrier layer 34 that faces the outer layer 20.

The carrier layer 34 can be made of any polymer suitable for lamination process. For example, the carrier can be made of PET (polyethylene terephthalate), PA (polyamide) or PLA (polylactic acid).

Advantageously, the carrier layer 34 is made of polyolefin such as PP. PE can yet be used too.

The permeability of the laminated material 1 is an important characteristic. Indeed, as already said, the product contained by the container formed by said laminated material 1 has to be protected from any environmental contamination. Thus, the permeability of the laminated material 1 has to be as low as possible.

It has been found by the applicant that the use of a carrier layer made of PP combined with inner and outer layers in PE improve the permeability properties of the laminated material, especially compared to a laminate with inner and outer layers also in PP.

Z According to the invention, a percentage in mass of PE within the laminated material 1 is set above a given threshold to adjust the permeability of the laminated material, said threshold being 80%.

The percentage in mass is for instance calculated by considering the density and the thickness of the measured layer. The density depends on the nature of the layer and is usually known by the man skilled in the art from provider's data sheet.

A measurement can also be realized before the lamination process in order to measure each layers separately. The measurement can also be realized after the lamination process, on samples of the laminated material.

Said threshold is 80%, or even 85%, or even 90%. Such percentage in mass of PE within the laminated material 1 allows reducing the permeability of said laminated material.

Advantageously, the inner layer is made of PE.

More advantageously, the outer layer is also made of PE.

However, PE and PP are weakly compatible with each other. That is to say, if a certain quantity of one of these polymeric components ends in the other during the recycling, the recycled material is considered as having degraded properties and as no longer responding to noble applications with high added value. The applicant has nevertheless experienced that as the use of PP is limited to the carrier layer it is possible to define a threshold of PP in PE in order to allow the recyclability of the laminated material 1.

Said threshold can be defined by determining the thickness of the different layers.

Advantageously, the total thickness of the laminated material 1 is comprised between 150 and 300µm and the thickness of the carrier layer is comprised between 15µm and 30µm.

More advantageously, the total thickness of the laminated material 1 is comprised between 190 and 250µm and the thickness of the carrier layer is comprised between 19µm and 25µm.

Thereby, the proportion in mass of the PP carrier layer represents at most 10% within the laminated material. This ratio can vary in function of the density of the different polyethylene and polypropylene used in the laminated material.

More advantageously, the proportion in mass of the PP carrier layer represent between 7 to 8% in mass within the laminated material.

The SiOx barrier 32 can be carried by various type of PP carrier layer 34.

Furthermore, carrier layers made of PP are widely commercially available and represent a standard composition. Advantageously, the carrier layer is an oriented PP (oPP).

Said carrier layer 34 represents most of the thickness of the barrier layer 30 as the SiOx is advantageously a thin layer coated on the carrier layer 34.

Preferably, the barrier layer 30 comprising said carrier layer 34 and SiOx coating has a thickness between 10 and 35µm. More preferably, the barrier layer 30 has a thickness between 15 and 25 µm.

Advantageously, a thin inorganic layer of silicon oxide is evaporated in a vacuum environment to a PP carrier layer 34 substrate.

To sum up, a laminated material 1 comprising an inner layer 10 and an outer layer 20 made of PE and in which only the carrier layer 34 carrying a SiOx barrier 32 is made of PP has good permeability properties, involves improved recyclability and has a standard widely commercially available barrier layer 30.

The laminated material 1 may comprise a tie layer 50 and/or an adhesive layer 52 above and/or below the barrier layer 30. The type of layer used depends on the lamination process. Adhesive layers 52 are used for adhesive lamination process and tie layers 50 are used with extrusion lamination process. Said tie/adhesive layers are used to connect the inner layer 10 and barrier layer 30 as well as the outer layer 20 and the barrier layer 30.

The laminated material 1 may also comprise a primer layer 54 on the surface of the SiOx barrier. Said primer layer improves the adhesion between SiOx and the other layers of the laminated material, especially between the SiOx barrier 32 and the tie layer 50.

As already said, the laminated material 1 may comprise a decorative layer. Said decorative layer may be obtained from various substrates such as polymeric films. Said decorative may be made of a highly decorated surface, including bright metallic, holographic effects and customized colors.

Said decorative layer may be the uppermost layer of the laminated material or may be located at any level of the outer layer 20 between an uppermost layer and the barrier layer 30.

The following structures are exemplary embodiments of laminated materials according to the present invention. The invention is not restricted to the specific laminated material of the exemplary embodiments but encompasses other laminated material structures falling within the scope of the appended claims.

The different layers of these exemplary embodiments of laminated material are described starting from the external layer, i.e. the intended outer surface uppermost, to the internal layer, i.e. the intended inner (product-contacting) surface lowermost.

### Embodiment 1:

This embodiment is schematically represented at figure 1. Said embodiment is constituted of:
- a layer 22 made of PE (LDPE),
- a layer 24 made of PE (HDPE),
- a layer 26 made of PE (LDPE),
- a layer 40 made of PE,
- a first tie layer 50,
- a layer 32 made of SiOx,
- a carrier layer 34 made of PP (oriented PP),
- a second tie layer 50,
- a layer 10 of PE (LDPE),

The laminated material 1 is obtained from these different layers by extrusion lamination.

The layers 22, 24 and 26 represent the outer layer 20. Said outer layer has a thickness of 110µm.

The layer 40 represents an intermediate layer. The intermediate layer 40 and the first tie layer 50 taken together have a thickness of 51µm.

The layers 32 and 34 represent the barrier layer 30. Said barrier layer has a thickness 18µm.

The layer 10 represents the inner layer. The inner layer 10 and the second tie layer 50 taken together have a thickness of 51µm.

The laminated material has a total thickness of 230µm.

### Embodiment 2:

This embodiment is schematically represented at figure 1. Said embodiment is constituted of:
- a layer 22 made of PE (LDPE),
- a layer 24 made of PE (HDPE),
- a layer 26 made of PE (LDPE),
- a layer 40 made of PE,
- a first tie layer 50,
- a primer layer 54,
- a layer 32 made of SiOx,
- a carrier layer 34 made of PP (oriented PP),
- a second tie layer 50,
- a layer 10 of PE (LDPE),

The laminated material 1 is obtained from these different layers by extrusion lamination.

The layers 22, 24 and 26 represent the outer layer 20. Said outer layer has a thickness of 110µm.

The layer 40 represents an intermediate layer. The intermediate layer 40 and the first tie layer 50 taken together have a thickness of 50µm.

The primer layer 60 has a thickness of 2µm.

The layers 32 and 34 represent the barrier layer 30. Said barrier layer has a thickness 18µm.

The layer 10 represents the inner layer. The inner layer 10 and the second tie layer 50 taken together have a thickness of 50µm.

The laminated material has a total thickness of 230µm.

### Embodiment 3:

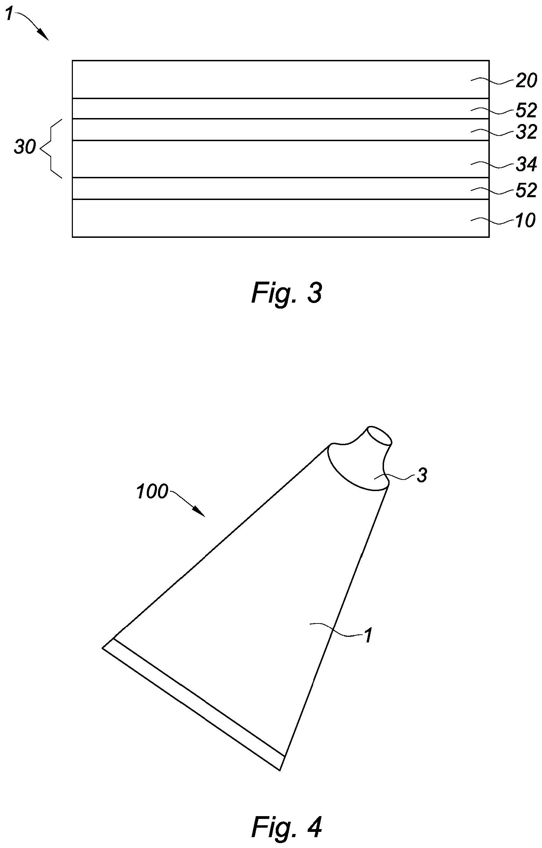

This embodiment is schematically represented at figure 3. Said embodiment is constituted of:
- a layer 20 made of PE (blown film),
- a first adhesive layer 52,
- a layer 32 made of SiOx,
- a carrier layer 34 made of PP (oriented PP),
- a second adhesive layer 52,
- a layer 10 of PE (blown film),

The laminated material is obtained from these different layers by adhesive lamination. The outer layer 20 has a thickness of 103µm.

The adhesive layers 52 both have a thickness of 3µm.

The layers 32 and 34 represent the barrier layer 30. Said barrier layer has a thickness 18µm.

The inner layer 10 has a thickness of 103µm.

The laminated material has a total thickness of 230µm.

The permeability of the embodiment 3 has been tested and compared to other polyolefin based laminated material comprising a barrier layer.

A first example of a compared laminated material, called LM1, is constituted of:
- a layer 22 made of PP,
- a layer 24 made of PP,
- a first adhesive layer 52,
- a layer 32 made of SiOx,
- a carrier layer 34 made of PP,
- a second adhesive layer 52,
- a layer 12 made of PP,
- a layer 14 made of PP,

The laminated material is obtained from these different layers by adhesive lamination. The layers 22 and 24 represent the outer layer 20. Said outer layer has a thickness of 88µm.

The adhesive layers 52 both have a thickness of 3µm.

The layers 32 and 34 represent the barrier layer 30. Said barrier layer has a thickness of 18µm.

The layers 12 and 14 represent the inner layer 10. Said inner layer has a thickness of 88µm.

The laminated material has a total thickness of 200µm.

A second example of a compared laminated material, called LM2, is constituted of:
- a first layer of LDPE,
- a first layer of HDPE,
- a first tie layer,
- a first barrier layer of EVOH,
- a second tie layer,
- a second layer of LDPE,
- a second layer of HDPE,
- a first layer of EVA,
- a second layer of EVA,
- a third layer of HDPE,
- a third layer of LDPE,
- a third tie layer,
- a second barrier layer of EVOH,
- a fourth tie layer,
- a fourth layer of HDPE,
- a fourth layer of LDPE.

The laminated material is obtained from these different layers by adhesive lamination. The laminated material has a total thickness of 332µm.

In order to test the permeability properties of one embodiment of the invention and to compare them to control laminates, the Applicant performed the following tests.

The different laminated materials have been put in contact with a hydroalcoholic solution of organic compounds (limonene, eucalyptol, menthone, menthol, carvone and anethole) with permeation cells. The concentration of each organic compound is 0.1%.

The permeation of the organic compounds was carried out with a device comprising a permeation cell and a system for sampling the gas space. The permeation of the organic compounds is achieved by a glass cell with two compartments separated by the laminated material to be tested. The hydro-alcoholic solution of the organic compounds is arranged in an upstream compartment, and the permeation of the organic compounds is monitored at regular intervals by sampling the gaseous space of a downstream compartment using a SPME (Solid Phase MicroExtraction) fiber. The device is placed in a thermostatically controlled enclosure, in this case at 40 ° C. After each sampling with the SPME fiber, said fiber is introduced into a gas chromatograph injector. The organic compounds are thus desorbed at 250 ° C and analyzed on a GC (Gas Chromatography) capillary column.

The delay times in min (lag-time) for each molecule / each laminated material as well as the slopes of permeation kinetics corresponding to the flow of material per unit of time, in the stationary state were calculated. The diffusion coefficient has also been reported.

The embodiment 3 (E3) according the invention is compared to the laminated materials LM1 and LM2. The results are given in the table below. In the case of LM1, the limonene and the eucalyptol were not possible to separate by GC, the sum of the areas of these two components are then reported in the table.

**TABLE 1: Lag time, slope and diffusion coefficient (D) values from laminated materials permeation kinetics test.**

| | | Limonene | Eucalyptol | Menthone | Menthol | Carvone | Anethole |
|---|---|---|---|---|---|---|---|
| E 3 | Lag time (min) | 1801 | 1510 | 2878 | 3554 | 1833 | 1066 |
| | Slope | 1 | 2 | 11 | 6 | 5 | 5 |
| | D (m²/s) | 8e-14 | 10e-14 | 5e-14 | 4e-14 | 8e-14 | 1e-13 |
| LM 1 | Lag time (min) | 3543 | | 3185 | 2870 | 2351 | 700 |
| | Slope | 94 | | 86 | 80 | 101 | 39 |
| | D (m²/s) | 3e-14 | | 4e-14 | 4e-14 | 5e-14 | 2e-13 |
| LM 2 | Lag time (min) | 2841 | 6895 | 5824 | 6268 | >11000 | >11000 |
| | Slope | 4 | 13 | 3 | 3 | 0 | 0 |
| | D (m²/s) | 1e-13 | 4e-14 | 5e-14 | 5e-14 | <3e-14 | <3e-13 |

The two most relevant parameters to analyze are the lag time and the slope.

The lag time indicates the time after which a tested molecule is detected on the other side of the tested laminated material. The longer the lag time, the better is the permeability of the material for the tested molecule.

The slope of permeation kinetics corresponds to the flow of material per time unit, in the stationary state. The lower the slope, the slower is the permeation of the compounds. This means that less aromatic compounds are lost through the material as a function of time. This is a quality sought to keep the characteristics of a product inside a package as long as possible.

When comparing the lag time of the tested laminated materials, it is seen that LM2 gets the best results, a high lag time being synonymous with high barrier performance.

This can easily be explained by the presence of two EVOH barrier layers in LM2. In addition, this laminated material has a greater thickness than the two other laminated materials.

Comparing the slopes of the tested laminated materials, it is found that embodiment 3 gets substantially similar results to those of LM2 and far better results to those of LM1. Embodiment 3 even gets better results than LM2 for limonene and eucalyptol.

Surprisingly, embodiment 3 gets similar permeation results to those of LM2 while the latter is thicker and has a double barrier layer of EVOH.

Thus, the embodiment 3 according to the invention makes it possible to obtain a very good barrier effect while reducing the thickness and the number of barrier layers with respect to LM2.

In addition, the use of a SiOx barrier instead of EVOH makes it possible to improve, or at least maintain the recycling possibilities of the material according the invention in comparison with LM2.

Furthermore, when compared to LM1 which has the same barrier layer and substantially similar thickness, it is seen that the embodiment 3 according to the invention has a significantly lower slope for each tested molecule. Thus, the use of PE for inner/outer layers with a SiOx barrier layer comprising a carrier layer made of a polymer suitable for lamination process, especially PP, improves the permeability properties of the laminated material, especially when compared to laminated materials comprising a carrier layer made of PP combined with PP inner/outer layers (difference between 1 to at least 10).

Advantageously, when PE represents at least 90% in mass of the laminated material, like in examples 1 and 2, the laminated material presents good recycling properties even alone.

Furthermore, the applicant found out that such a laminated material 1 is preferential for recycling especially when recycled with a tube head made of PE. Indeed, when the tube head is made from PE, the overall percentage of PE in the laminated material 1 and the tube head will allow recycling them without having to separate PE from the rest of the laminated material 1.

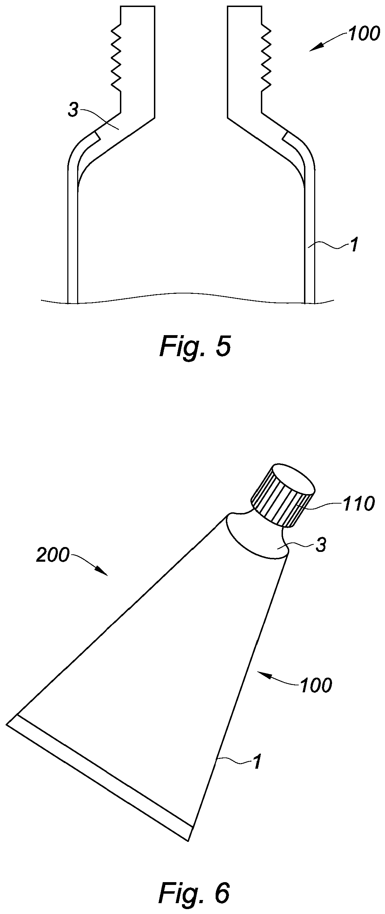

Hence, as illustrated in figures 4 and 5, the present invention also relates to an assembly 100 comprising the laminated material 1 described above and a tube head 3, said laminated material 1 forming a tube skirt 2 joined to the tube head 3, wherein said tube head 3 is made of PE.

The tube skirt 2 is made from the laminated material 1 by folding the laminated material described herein into a desired configuration and heat sealing the overlapping edges. Techniques for forming such containers are well known in the art, for example EP0321172 discloses a technique for forming containers including toothpaste tubes.

Advantageously, the tube skirt 2 is made from the laminated material 1 by rolling the laminated material 1 into a cylinder and then seaming the edges together to form a continuous tube (that is subsequently cut to length). After the assembly 100 is filled, the tube skirt 2 needs to be closed by heat sealing at the tube end. In this operation the inside of the tube is heated and pinched closed in jaws that apply pressure.

All the previously mentioned advantages of the laminated material 1 equally applied to the assembly 100 comprising said laminated material 1.

Preferably, PE represents at least 90% in mass of the assembly 100. The applicant found out that such assembly 100 is allowable for recycling when recycled alone.

In practice, a laminated material 1 forming a tube skirt 2, a tube head 3, and a cap of a flexible container are rarely separately recycled. Thus, there is a specific need for a container that can be recycled without separating its different parts.

As illustrated in figure 6, the present invention also relates to a flexible container 200, comprising the assembly 100 described above and a cap, wherein said cap is made of PE.

In such container 200, the proportion of PE is chosen according to the invention to allow to recycle said container 200 without having to separate PE from the rest of the container 200. Thus, the recyclability of said container 200 is greatly improved.

The assembly may also comprise an insert made of the laminated material. The insert is for instance provided in the tube head where it is preferentially overmolded by a polyolefin material like PE or PP.

All the previously mentioned advantages of the laminated material 1 equally applied to the flexible container 200 comprising said laminated material 1.

Preferably, PE represents at least 95% in mass of the flexible container 200. The applicant found out that such flexible container 200 is allowable for recycling.

## Claims

1. A laminated material (1) for forming a flexible container (200), the laminated material (1) comprising an inner layer (10), an outer layer (20) and an intermediate barrier layer (30), the barrier layer (30) comprising a SiOx barrier (32) and a carrier layer (34) carrying said SiOx barrier (32), said carrier layer (34) being made of polymer suitable for lamination process, the inner layer (10) and the outer layer (20) both comprising PE, a percentage in mass of PE within the laminated material (1) being set above a given threshold to adjust the permeability of the laminated material (1), said threshold being 80%.

2. A laminated material (1) according to claim 1, wherein the carrier layer (34) is made of polyolefin.

3. A laminated material (1) according to claim 1, wherein the carrier layer (34) is made of PP.

4. A laminated material (1) according to any of the preceding claims, wherein the inner layer (10) is made of PE.

5. A laminated material (1) according to any of the preceding claims, wherein the outer layer (20) is made of PE.

6. A laminated material (1) according to claims 4 or 5, wherein the layers made of PE has a biaxial orientation.

7. A laminated material (1) according to any of the preceding claims, wherein the carrier layer (34) has a monoaxial orientation.

8. A laminated material (1) according to any of the preceding claims, wherein the thickness of the carrier layer (34) is comprised between 15µm and 30µm, the total thickness of the laminated material (1) being comprised between 150µm and 300µm such that the proportion in mass of the carrier layer (34) represent at most 10% in mass within the laminated material.

9. A laminated material (1) according to any of the preceding claims, said laminated material (1) having a substantially symmetrical layering structure from either side of said barrier layer (30).

10. An assembly (100), comprising the laminated material (1) according claims 1 to 9 and a tube head (3), said laminated material (1) forming a tube skirt (2) joined to the tube head (3).

11. An assembly (100) according to claim 10, wherein said tube head (3) is made of PE.

12. An assembly (100) according to claims 10 to 11, wherein PE represents at least 90% in mass of the assembly (100).

13. A flexible container (200), comprising the assembly (100) according claims 12 to 14 and a cap (110).

14. A flexible container (200) according to claim 13, wherein said cap (110) is made of PE.

15. A flexible container (200) according to claims 13 to 14, wherein PE represents at least 95% in mass of the flexible container (200).

## Patentansprüche

1. Laminiertes Material (1) zur Bildung eines flexiblen Behälters (200), wobei das laminierte Material (1) eine innere Schicht (10), eine äußere Schicht (20) und eine dazwischenliegende Barriereschicht (30) umfasst, wobei die Barriereschicht (30) eine SiOx-Barriere (32) und eine Trägerschicht (34) umfasst, welche die SiOx-Barriere (32) trägt, wobei die Trägerschicht (34) aus einem für ein Laminierungsverfahren geeigneten Polymer besteht, wobei die innere Schicht (10) und die äußere Schicht (20) beide PE umfassen, wobei ein Massenprozentsatz von PE innerhalb des laminierten Materials (1) über einem gegebenen Schwellenwert eingestellt ist, um die Permeabilität des laminierten Materials (1) anzupassen, wobei der Schwellenwert 80 % beträgt.

2. Laminiertes Material (1) nach Anspruch 1, wobei die Trägerschicht (34) aus Polyolefin besteht.

3. Laminiertes Material (1) nach Anspruch 1, wobei die Trägerschicht (34) aus PP besteht.

4. Laminiertes Material (1) nach einem der vorstehenden Ansprüche, wobei die innere Schicht (10) aus PE besteht.

5. Laminiertes Material (1) nach einem der vorstehenden Ansprüche, wobei die äußere Schicht (20) aus PE besteht.

6. Laminiertes Material (1) nach Anspruch 4 oder 5, wobei die Schichten, die aus PE bestehen, eine biaxiale Ausrichtung aufweisen.

7. Laminiertes Material (1) nach einem der vorstehenden Ansprüche, wobei die Trägerschicht (34) eine monoaxiale Ausrichtung aufweist.

8. Laminiertes Material (1) nach einem der vorstehenden Ansprüche, wobei die Dicke der Trägerschicht (34) zwischen 15 µm und 30 µm umfasst, wobei die Gesamtdicke des laminierten Materials (1) zwischen 150 µm und 300 µm umfasst, sodass der Massenanteil der Trägerschicht (34) höchstens 10 % der Masse innerhalb des laminierten Materials darstellt.

9. Laminiertes Material (1) nach einem der vorstehenden Ansprüche, wobei das laminierte Material (1) eine im Wesentlichen symmetrische Schichtstruktur von jeder Seite der Barriereschicht (30) aufweist.

10. Anordnung (100), umfassend das laminierte Material (1) nach den Ansprüchen 1 bis 9 und einen Tubenkopf (3), wobei das laminierte Material (1) einen mit dem Tubenkopf (3) verbundenen Tubenmantel (2) bildet.

11. Anordnung (100) nach Anspruch 10, wobei der Tubenkopf (3) aus PE besteht.

12. Anordnung (100) nach einem der Ansprüche 10 bis 11, wobei PE mindestens 90 % der Masse der Anordnung (100) darstellt.

13. Flexibler Behälter (200), umfassend die Anordnung (100) nach den Ansprüchen 12 bis 14 und eine Kappe (110).

14. Flexibler Behälter (200) nach Anspruch 13, wobei die Kappe (110) aus PE besteht.

15. Flexibler Behälter (200) nach einem der Ansprüche 13 bis 14, wobei PE mindestens 95 % der Masse des flexiblen Behälters (200) darstellt.

## Revendications

1. Matériau stratifié (1) pour former un récipient souple (200), le matériau stratifié (1) comprenant une couche interne (10), une couche externe (20) et une couche barrière intermédiaire (30), la couche barrière (30) comprenant une barrière de SiOx (32) et une couche de support (34) portant ladite barrière de SiOx (32), ladite couche de support (34) étant faite d'un polymère approprié pour un procédé de stratification, la couche interne (10) et la couche externe (20) comprenant toutes deux du PE, un pourcentage en masse de PE dans le matériau stratifié (1) étant fixé au-dessus d'un seuil donné pour ajuster la perméabilité du matériau stratifié (1), ledit seuil étant de 80 %.

2. Matériau stratifié (1) selon la revendication 1, dans lequel la couche de support (34) est faite de polyoléfine.

3. Matériau stratifié (1) selon la revendication 1, dans lequel la couche de support (34) est faite de PP.

4. Matériau stratifié (1) selon l'une quelconque des revendications précédentes, dans lequel la couche interne (10) est constituée de PE.

5. Matériau stratifié (1) selon l'une quelconque des revendications précédentes, dans lequel la couche externe (20) est constituée de PE.

6. Matériau stratifié (1) selon les revendications 4 ou 5, dans lequel les couches constituées de PE présentent une orientation biaxiale.

7. Matériau stratifié (1) selon l'une quelconque des revendications précédentes, dans lequel la couche de support (34) présente une orientation monoaxiale.

8. Matériau stratifié (1) selon l'une quelconque des revendications précédentes, dans lequel l'épaisseur de la couche de support (34) est comprise entre 15 µm et 30 µm, l'épaisseur totale du matériau stratifié (1) étant comprise entre 150 µm et 300 µm de sorte que la proportion en masse de la couche de support (34) représente au plus 10 % en masse dans le matériau stratifié.

9. Matériau stratifié (1) selon l'une quelconque des revendications précédentes, ledit matériau stratifié (1) présentant une structure en couches sensiblement symétrique de chaque côté de ladite couche barrière (30).

10. Ensemble (100), comprenant le matériau stratifié (1) selon les revendications 1 à 9 et une tête de tube (3), ledit matériau stratifié (1) formant une jupe de tube (2) jointe à la tête de tube (3).

11. Ensemble (100) selon la revendication 10, dans lequel ladite tête de tube (3) est constituée de PE.

12. Ensemble (100) selon les revendications 10 à 11, dans lequel le PE représente au moins 90% en masse de l'ensemble (100).

13. Récipient souple (200), comprenant l'ensemble (100) selon les revendications 12 à 14 et un couvercle (110).

14. Récipient souple (200) selon la revendication 13, dans lequel ledit couvercle (110) est constitué de PE.

15. Récipient souple (200) selon les revendications 13 à 14, dans lequel le PE représente au moins 95 % en masse du récipient souple (200).
